# EUROPEAN PATENT SPECIFICATION

(11) **EP 4 474 944 B1**
(45) Date of publication and mention of the grant of the patent: **26.08.2026**
(21) Application number: 24761826.7
(22) Date of filing: 12.03.2024
(51) Int. Cl.: G06F 1/16, G06F 3/02

(54) **ELECTRONIC DEVICE AND ADAPTER SLEEVE**
ELEKTRONISCHE VORRICHTUNG UND ADAPTERHÜLSE
DISPOSITIF ÉLECTRONIQUE ET MANCHON ADAPTATEUR

(30) Priority: 17.03.2023 CN 202310293088
(43) Date of publication of application: 11.12.2024
(73) Proprietor: HUAWEI TECHNOLOGIES CO., LTD., Shenzhen, Guangdong 518129 (CN)
(72) Inventor: YAN, Shengda, Shenzhen, Guangdong 518129 (CN); LUO, Yang, Shenzhen, Guangdong 518129 (CN); ZHU, Guangyao, Shenzhen, Guangdong 518129 (CN); HE, Pan, Shenzhen, Guangdong 518129 (CN); CHEN, Yuancai, Shenzhen, Guangdong 518129 (CN)
(74) Representative: Goddar, Heinz J.
(86) International application number: PCT/CN2024/081198
(87) International publication number: WO 2024/193394

(56) References cited:
- CN-A- 104 166 433
- CN-A- 115 016 650
- CN-U- 215 813 904
- CN-U- 216 956 892
- CN-U- 217 213 536
- CN-U- 217 426 025
- CN-U- 218 471 272
- US-A1- 2014 098 026
- US-A1- 2016 357 224
- US-A1- 2020 150 720

## Description

### TECHNICAL FIELD

This application relates to the field of electronic product technologies, and in particular, to an electronic device and an adapt case.

### BACKGROUND

With development of science and technology, electronic devices enter an era of portability, for example, portable electronic devices such as a tablet computer can use a touchscreen as a basic input mode. To improve typing experience, a user can alternatively electrically connect a keyboard to a tablet host as an input end of an electronic device.

Currently, the tablet host is generally provided with a protective case, which affects electrical connectivity between the tablet host and the keyboard, and consequently implements poor contact between the tablet host and the keyboard. As a result, power supply and communication between the tablet host and the keyboard are affected.

Therefore, it is necessary to provide an electronic device to implement a reliable electrical connection between the tablet host provided with the protective case and the keyboard.

US 2016/357224 A1 discloses a protective cover for a device.

### SUMMARY

The invention is set out in the appended set of claims. Embodiments of this application provide an electronic device and an adapt case, to ensure integrity of cooperation between a host and an external keyboard, aesthetic harmony of the electronic device, and reliability of a connection between the host and the external keyboard.

According to a first aspect, an embodiment of this application provides an electronic device. The electronic device includes a host and an adapt case. The host includes a cover, a frame, and a display. The cover and the display are located on two opposite sides of the frame. The adapt case surrounds at least a part of the frame. The cover, the display, and the frame may form accommodation space to accommodate components such as a battery and a mainboard. The adapt case includes an adapter. One end of the adapter is configured to be in contact with and electrically connected to the host, and the other end of the adapter is configured to be in contact with and electrically connected to an external keyboard. The adapt case includes a buffer component. The buffer component is located at an end that is of the adapter and that faces the host, or the buffer component is located at an end that is of the adapter and that faces the external keyboard.

For example, the host may include a first connector, and the external keyboard may include a second connector. One end of the adapter is electrically connected to the first connector, and the other end of the adapter is electrically connected to the second connector, to implement power supply and communication between the host and the external keyboard.

If dimensions of the host and the keyboard are inconsistent, when the keyboard is used for the host, integrity of cooperation between the keyboard and the host is poor, and an overall appearance of the electronic device is not harmonious. In embodiments of this application, the adapt case is disposed. The adapt case surrounds an outer side of the frame of the host, the adapt case and the host form a host body, and a dimension of the host body is greater than the dimension of the host. A host having a same dimension as that of a keyboard may adapt to the keyboard. When the dimension of the host is smaller than the dimension of the keyboard, the adapt case is disposed around the host. In this way, an overall dimension of the adapt case and the host can adapt to the keyboard. This resolves problems of poor integrity of cooperation between the host and the keyboard and poor aesthetic harmony of the electronic device that are caused by inconsistent dimensions of the host and the keyboard. Communication and a power-supply connection between the host and the keyboard can be implemented by using the first connector and the second connector. After the adapt case is disposed on the outer side of the host, a part of the adapt case is located between the first connector and the second connector, a spacing between the first connector and the second connector is increased, and consequently the second connector may be in poor contact or cannot be in contact with the first connector. In embodiments of this application, the adapter is disposed, and the adapter connects the first connector of the host to the second connector of the external keyboard, to ensure a stable electrical connection between the host and the keyboard, thereby improving reliability of the connection between the host and the external keyboard.

In a possible implementation, the adapt case includes a main part and a side part. The side part is disposed around the main part. The main part is on a side that is of the cover and that is away from the display. The side part surrounds at least the part of the frame. The adapter is embedded into the main part or the side part. A location of the first connector on the host is unfixed, and the adapter needs to be in contact with and electrically connected to the first connector. Therefore, a location of the adapter in a main body is also unfixed. For example, the first connector may be disposed on the back of the host and a part of the cover is exposed, and the adapter may be correspondingly disposed on the main part of the adapt case. Alternatively, the first connector may be disposed on the side part of the host and a part of the frame is exposed, and the adapter may be correspondingly disposed on the side part of the adapt case. The first connector may alternatively be disposed at another location of the host, and the adapter may alternatively be disposed in a corresponding region of the adapt case, to implement good contact and a good connection between the adapter and the first connector, and shorten a path of an electrical connection.

In a possible implementation, the adapt case includes a first side part and a second side part that are disposed opposite to each other. The host is located between the first side part and the second side part. The adapter is embedded into the second side part. A dimension of the first side part in a first direction is greater than a dimension of the second side part in the first direction. The first direction is an arrangement direction of the first side part and the second side part. One end of the adapter needs to be connected to the first connector, and the other end of the adapter needs to be connected to the second adapter. When the adapter is disposed on the second side part, the dimension of the second side part in the first direction increases, and a dimension of the adapter in the first direction also needs to increase, to ensure that the adapter is electrically connected to the first connector and the second connector. The increase in the dimension of the adapter results an increase in costs. In embodiments of this application, a thickness of the first side part is set to be greater than a thickness of the second side part, to reduce the dimension of the adapter, reduce production costs of the adapter, and enable the overall dimension of the host body formed by the adapt case and the host to adapt to the keyboard.

In a possible implementation, the electronic device includes a first magnetic component and a second magnetic component. The first magnetic component is located at the adapt case. The second magnetic component is located at the keyboard. Attraction exists between the first magnetic component and the second magnetic component. When the host is connected to the keyboard, the first magnetic component and the second magnetic component may implement a function of positioning or adsorption and fastening. The first magnetic component in embodiments of this application may be disposed in the adapt case. Compared with a current case in which the first magnetic component is disposed in the host, this can save internal space of the host, improve space utilization of the host, and provide sufficient space for disposing another component in the host.

In a possible implementation, the adapt case may include a main body. The main body surrounds at least a part of a plastic frame, and the adapter may be embedded into the main body of the adapt case. When the adapter is embedded into the main body of the adapt case, due to factors such as a structure or a shape of the adapter and the main body of the adapt case, the adapter is not fully attached to the main body of the adapt case, and there may be a gap between the adapter and the main body of the adapt case. The buffer component is disposed to fill the gap between the adapter and the main body of the adapt case. This prevents the gap from affecting an appearance of the electronic device or prevents external impurities from entering the main body of the adapt case and the host through the gap. In addition, in a process of mounting the adapt case on the host, the rigid adapter may damage the host. When the host is connected to the keyboard, the rigid adapter may also damage the keyboard. A material of the buffer component generally has a deformation capability. In the process of mounting the adapt case on the host, the buffer component may bear a part of a force, to protect the host, prevent an outer surface of the host from being scratched by the adapter, and prevent the adapter from damaging the keyboard when the host is connected to the keyboard.

In a possible implementation, the adapter includes an elastic part, and the elastic part is elastically connected between the host and the external keyboard. The elastic part may be compressed under a force and elastically connected in an abutting manner between the first connector of the host and the second connector of the external keyboard. This facilitates full and stable contact between the elastic part and the first connector and between the elastic part and the second connector, thereby improving reliability of connections between the elastic part and the first connector and between the elastic part and the second connector.

In a possible implementation, the adapter includes an adapter part. The adapter part is electrically connected between the elastic part and a second contact of the keyboard, and an area of a surface that is of the adapter part and that faces the second contact is greater than or equal to an area of a surface that is of the second contact and that faces the adapter part; or the adapter part is electrically connected between the elastic part and a first contact of the host, and an area of a surface that is of the adapter part and that faces the first contact is greater than or equal to an area of a surface that is of the first contact and that faces the adapter part. A dimension of the second contact is generally small. The area of the surface that is of the adapter part and that faces the second contact is set to be greater than or equal to the area of the surface that is of the second contact and that faces the adapter part. When the adapter and the second contact are interconnected, even if a small-range misplacement occurs, contact and a connection between the adapter part and the second contact can be ensured. This helps reduce difficulty in connecting the second contact to the adapter and improve connection reliability. Similarly, it can be learned that the area of the surface that is of the adapter part and that faces the first contact is set to be greater than or equal to the area of the surface that is of the first contact and that faces the adapter part. This can also reduce difficulty in connecting the first contact to the adapter and improve connection reliability.

In a possible implementation, a projection, in a second direction, of a center of a surface that is of the adapter and that faces the host does not coincide with a projection, in the second direction, of a center of a surface that is of the adapter and that faces the external keyboard, and the second direction is perpendicular to the display. A location of the second connector of the keyboard is preset, and the adapt case has a thickness. After the adapt case is disposed on the host, it needs to be ensured that the adapter is in contact with the second connector. As a result, a through hole on the adapt case for accommodating the adapter may not be directly aligned with to a hole on the host for mounting the first connector. If, in the second direction, the projection, in the second direction, of the center of the surface that is of the adapter and that faces the host coincides with the projection, in the second direction, of the center of the surface that is of the adapter and that faces the external keyboard, there is poor contact or a failure of contact and a connection when the adapter is connected to the first connector of the host or the adapter is connected to the second connector of the external keyboard. In the second direction, the projection, in the second direction, of the center of the surface that is of the adapter and that faces the host may not coincide with the projection, in the second direction, of the center of the surface that is of the adapter and that faces the external keyboard. This helps ensure good contact and good connections both between the adapter and the first connector of the host and between the adapter and the second connector of the external keyboard, thereby improving contact reliability.

In a possible implementation, the adapter includes the adapter part and a connection part. The connection part is electrically connected between the elastic part and the adapter part, and the adapter part is electrically connected between the connection part and the external keyboard. The connection part is disposed to increase the dimension of the adapter in the first direction. When a dimension of the main body of the adapt case in the first direction is large, a dimension of the adapter in the first direction needs to be set to be large, to implement good electrical connections between the adapter and the first connector and between the adapter and the second connector.

In a possible implementation, the connection part is a flexible circuit board or a metal sheet. In another implementation, the connection part may be a conductive wire or the like, and the connection part can implement an electrical connection between mechanical components inside the adapter.

In a possible implementation, a surface that is of the connection part and that faces the adapter part is an arc surface, and the arc surface is in contact with and electrically connected to the adapter part. The contact surface between the connection part and the adapter part is an arc, so that an intersection line may always exist between the connection part and the adapter part. This can ensure a status of good contact between the connection part and the adapter part.

In a possible implementation, the adapter includes a carrier. At least a part of the elastic part is in the carrier, and the carrier is fastened into the adapt case. The carrier is configured to assemble the adapter as a whole, to facilitate a connection to the main body of the adapt case. In addition, the carrier may have a fastening function on the elastic part, to avoid deformation or displacement of the elastic part that is due to external impact or another factor and that affects a status of contact between the adapter and the first connector. The carrier and the main body of the adapt case may be fastened by using a screw, a bolt, a clip, adhesive, or the like.

According to a second aspect, an embodiment of this application provides an adapt case, used for an electronic device including a host and an external keyboard. The adapt case includes a main body and an adapter. The adapter is embedded into the main body, and the main body surrounds at least a part of a frame of the host. One end of the adapter is configured to be in contact with and electrically connected to the host, and the other end of the adapter is configured to be in contact with and electrically connected to the external keyboard. The adapt case includes a buffer component. The buffer component is located at an end that is of the adapter and that faces the host, or the buffer component is located at an end that is of the adapter and that is away from the host. The main body may include a main part and a side part. The side part is disposed around the main part. The main part is on a side that is of a cover of the host and that is away from a display of the host. The side part surrounds at least the part of the frame of the host. In other embodiments, the main body may alternatively include a side part but include no main part. In embodiments of this application, the adapt case is disposed to ensure integrity of cooperation between the host and the keyboard and aesthetic harmony of the electronic device. The adapter is configured to connect a first connector to a second connector, to ensure a stable electrical connection between the host and the keyboard, thereby improving reliability of the connection between the host and the keyboard.

In a possible implementation, the main body includes a main part and a side part. The side part is disposed around the main part. The side part surrounds at least the part of the frame. The adapter is embedded into the main part or the side part. A location of the first connector of the host on the host is unfixed, and the adapter needs to be in contact with and electrically connected to the first connector. Therefore, a location of the adapter in a main body is also unfixed. For example, the first connector may be disposed on the back of the host and a part of the cover is exposed, and the adapter may be correspondingly disposed on the main part of the adapt case. Alternatively, the first connector may be disposed on the side part of the host and a part of the frame is exposed, and the adapter may be correspondingly disposed on the side part of the adapt case. The first connector may alternatively be disposed at another location of the host, and the adapter may alternatively be disposed in a corresponding region of the adapt case, to implement good contact and a good connection between the adapter and the first connector, and shorten a path of an electrical connection.

In a possible implementation, the main body includes a first side part and a second side part that are disposed opposite to each other. The host is located between the first side part and the second side part. The adapter is embedded into the second side part. A dimension of the first side part in a first direction is greater than a dimension of the second side part in the first direction. The first direction is an arrangement direction of the first side part and the second side part. One end of the adapter needs to be connected to the first connector, and the other end of the adapter needs to be connected to the second adapter. When the adapter is disposed on the second side part, the dimension of the second side part in the first direction increases, and a dimension of the adapter in the first direction also needs to increase, to ensure that the adapter is electrically connected to the first connector and the second connector. The increase in the dimension of the adapter results an increase in costs. In embodiments of this application, the dimension of the first side part in the first direction is set to be greater than the dimension of the second side part in the first direction, so that an overall dimension of a host body formed by the adapt case and the host can adapt to the keyboard, and the dimension of the second side part can be reduced, to reduce the dimension of the adapter and reduce production costs of the adapter.

In a possible implementation, the adapt case may include a main body. The main body surrounds at least a part of a plastic frame, and the adapter may be embedded into the main body of the adapt case. When the adapter is embedded into the main body of the adapt case, due to factors such as a structure or a shape of the adapter and the main body of the adapt case, the adapter is not fully attached to the main body of the adapt case, and there may be a gap between the adapter and the main body of the adapt case. The buffer component is disposed to fill the gap between the adapter and the main body of the adapt case. This prevents the gap from affecting an appearance of the electronic device or prevents external impurities from entering the main body of the adapt case and the host through the gap. In addition, in a process of mounting the adapt case on the host, the rigid adapter may damage the host. When the host is connected to the keyboard, the rigid adapter may also damage the keyboard. A material of the buffer component generally has a deformation capability. In the process of mounting the adapt case on the host, the buffer component may bear a part of a force, to protect the host, prevent an outer surface of the host from being scratched by the adapter, and prevent the adapter from damaging the keyboard when the host is connected to the keyboard.

In a possible implementation, the adapter includes an elastic part, and the elastic part is elastically connected between the host and the external keyboard. The elastic part may be compressed under a force and elastically connected in an abutting manner between the first connector of the host and the second connector of the external keyboard. This facilitates full and stable contact between the elastic part and the first connector and between the elastic part and the second connector, thereby improving reliability of connections between the elastic part and the first connector and between the elastic part and the second connector.

In a possible implementation, the adapter includes an adapter part. The adapter part is electrically connected between the elastic part and a second contact of the keyboard, and an area of a surface that is of the adapter part and that faces the second contact is greater than or equal to an area of a surface that is of the second contact and that faces the adapter part; or the adapter part is electrically connected between the elastic part and a first contact of the host, and an area of a surface that is of the adapter part and that faces the first contact is greater than or equal to an area of a surface that is of the first contact and that faces the adapter part. A dimension of the second contact is generally small. The area of the surface that is of the adapter part and that faces the second contact is set to be greater than or equal to the area of the surface that is of the second contact and that faces the adapter part. When the adapter and the second contact are interconnected, even if a small-range misplacement occurs, contact and a connection between the adapter part and the second contact can be ensured. This helps reduce difficulty in connecting the second contact to the adapter and improve connection reliability. Similarly, it can be learned that the area of the surface that is of the adapter part and that faces the first contact is set to be greater than or equal to the area of the surface that is of the first contact and that faces the adapter part. This can also reduce the difficulty in connecting the first contact to the adapter and improve the connection reliability.

### BRIEF DESCRIPTION OF DRAWINGS

The following describes the accompanying drawings used in embodiments of this application.
FIG. 1 is a diagram of a three-dimensional structure of an electronic device according to an embodiment of this application;
FIG. 2 is a diagram of a three-dimensional structure of another electronic device according to an embodiment of this application;
FIG. 3A is a diagram of a decomposed structure of the electronic device shown in FIG. 2;
FIG. 3B is a diagram of another decomposed structure of the electronic device shown in FIG. 2;
FIG. 3C is a diagram of a structure of a host, an adapt case, and a second support part according to an embodiment of this application;
FIG. 3D is a diagram of a structure of an adapt case and a second support part according to an embodiment of this application;
FIG. 4 is a diagram of a part of the structure of the electronic device shown in FIG. 2;
FIG. 5 is a diagram of a structure of an electronic device according to an embodiment of this application;
FIG. 6 is a diagram of a structure of an electronic device according to an embodiment of this application;
FIG. 7 is a diagram of a structure of an adapter according to an embodiment of this application;
FIG. 8 is a sectional view of the adapter shown in FIG. 7 at a place H1-H1;
FIG. 9 is a diagram of a structure of another electronic device according to an embodiment of this application;
FIG. 10 is a diagram of a structure of another adapter according to an embodiment of this application;
FIG. 11 is a sectional view of the adapter shown in FIG. 10 at a place H2-H2;
FIG. 12 is a diagram of a three-dimensional structure of another adapter according to an embodiment of this application;
FIG. 13 is a sectional view of the adapter shown in FIG. 12 at H3-H3; and
FIG. 14 is a diagram of a structure of another electronic device according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application.

All technical and scientific terms used in this specification have same meanings as those usually understood by a person skilled in the art of this application. In this application, the descriptions "first", "second", and the like are merely intended for a purpose of description, and shall not be understood as an indication or implication of relative importance or an implicit indication of a quantity of indicated technical features. The orientation terms mentioned in embodiments of this application, for example, "up", "down", "left", "right", "inside", and "outside", are merely directions with reference to the accompanying drawings. Therefore, the orientation terms are used to better and more clearly describe and understand embodiments of this application, instead of indicating or implying that an apparatus or element needs to have a specific orientation and be constructed and operated in a specific orientation, and cannot be understood as limitations on embodiments of this application.

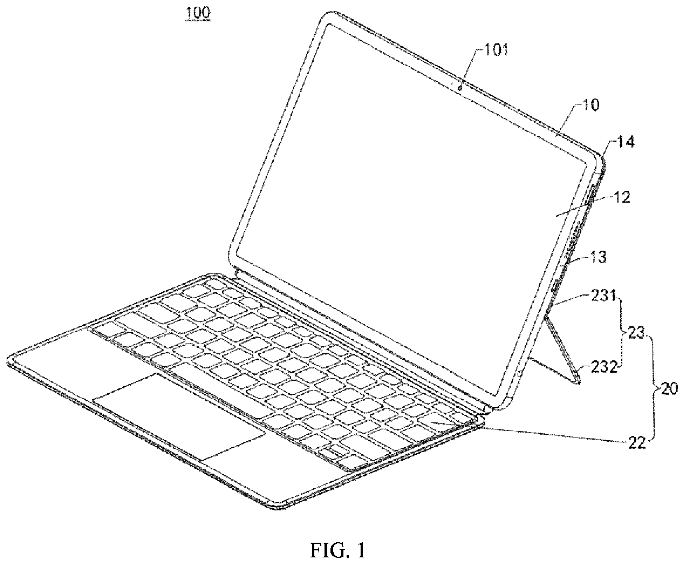

FIG. 1 is a diagram of a three-dimensional structure of an electronic device 100. An embodiment of this application provides the electronic device 100. The electronic device 100 may be an electronic product, for example, a tablet computer. The electronic device 100 may include a host 10, the host 10 is the device, and the host 10 may be configured to display an image. The host 10 may include a display 12, a frame 13, and a cover 14. The display 12 may include a display layer and a touch layer that covers the display layer. The display layer may be a liquid crystal display, an organic light-emitting diode display, or the like. The touch layer may be used by a user to perform a touch operation, and the touch layer may be a transparent glass cover, or made of plastic or another material with good light transmission performance. The display 12 may be used as an input end of the host 10 and can be configured to display an image, to meet a multi-use requirement of a user. The display 12 and the cover 14 may be disposed on two opposite sides of the frame 13 and spaced. The cover 14 and the frame 13 may be an integrated structure, or may be split structures that are connected through assembling.

The electronic device 100 may include an external keyboard 20, and the external keyboard 20 and the host 10 are detachably connected. The external keyboard 20 may include a keyboard part 22 and a support component 23. The keyboard part 22 is electrically connected to the host 10 to implement power supply and signal transmission between the external keyboard 20 and the host 10. The keyboard part 22 may be used as an input end of the host 10 to help the user implement quick input in a typing manner. The support component 23 may be fastened to the host 10 to provide a support force for the host 10 and protect the host 10. In this embodiment of this application, the keyboard part 22 and the support component 23 are separately disposed, and are not connected as a whole.

The support component 23 may include a first support part 231 and a second support part 232 that are connected. The first support part 231 may be attached to the host 10, and the first support part 231 may be detachably connected to the host 10 in a manner like magnetic adsorption or interference fit. In this embodiment of this application, an example in which the first support part 231 is securely connected to the host 10 through magnetic force interaction is used for description. The first support part 231 and the second support part 232 may be disposed at a specific included angle to support the host 10. The first support part 231 and the second support part 232 may be mutually folded. The support component 23 may be a leather case, a plastic case, or the like. The support component 23 may be in a plurality of forms, to meet requirements of different application scenarios of the electronic device 100.

In some implementations, the electronic device 100 includes a front-facing camera 101. The front-facing camera 101 is configured to photograph a picture or a video, to meet a photographing requirement of the electronic device 100. The electronic device 100 may further include a rear-facing camera (not shown in FIG. 1), configured to photograph a picture or a video. The electronic device 100 may be further provided with a power button, a volume button, a headset jack, and the like. FIG. 1 is merely a diagram of the structure of the electronic device 100. A structure of the electronic device 100 is not limited in this application.

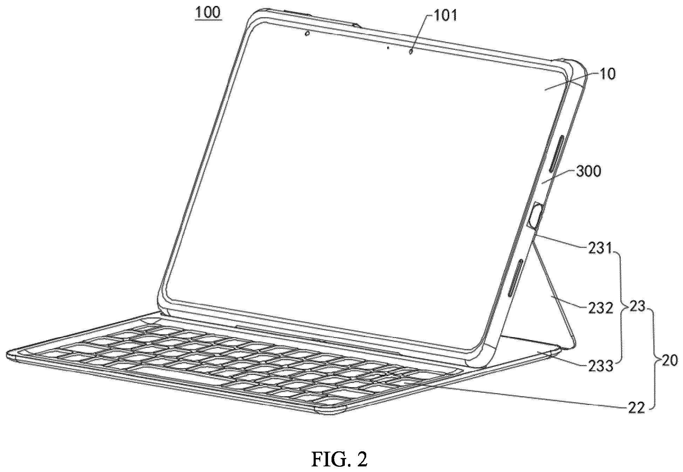

FIG. 2 is a diagram of a three-dimensional structure of another electronic device 100. In an embodiment of this application, a keyboard part 22 may be connected to a support component 23 to form an integrated structure. At least one difference between the electronic device 100 shown in FIG. 2 and the electronic device 100 shown in FIG. 1 lies in that the keyboard part 22 and the support component 23 shown in FIG. 1 are disposed separately and are not connected as a whole, and the keyboard part 22 and the support component 23 shown in FIG. 2 are combined into an integrated structure.

With reference to FIG. 2, the support component 23 may include a first support part 231, a second support part 232, and a third support part 233 that are connected in sequence. The first support part 231 may be attached to a host 10, and the first support part 231 may be detachably connected to the host 10 in a manner like magnetic adsorption or interference fit. In this embodiment of this application, an example in which the first support part 231 is securely connected to the host 10 through magnetic force interaction is used for description. The first support part 231 and the second support part 232 may be disposed at a specific included angle to support the host 10. The first support part 231 and the second support part 232 may be mutually folded. The third support part 233 and the second support part 232 are disposed at a specific included angle, and the keyboard part 22 is fastened to a side that is of the third support part 233 and that faces the host 10.

Locations, shapes, dimensions, and the like of the host 10 and the external keyboard 20 in FIG. 1 and FIG. 2 are merely examples, and may be adjusted based on a requirement. A specific form of the electronic device 100 is not limited in this application.

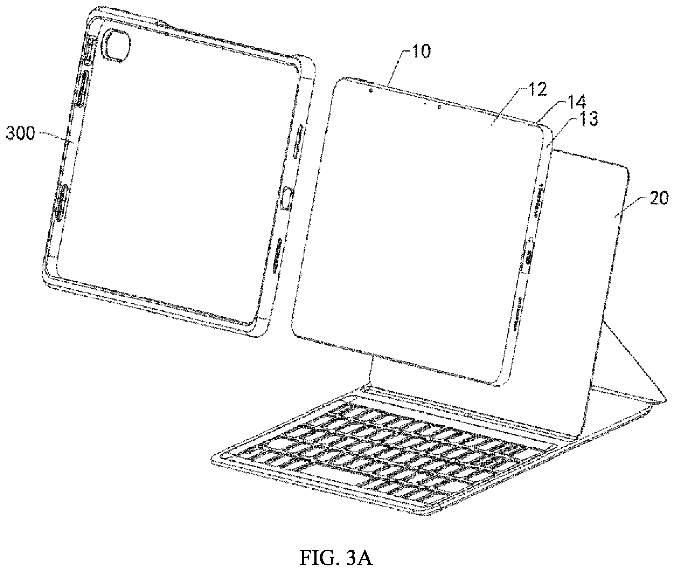

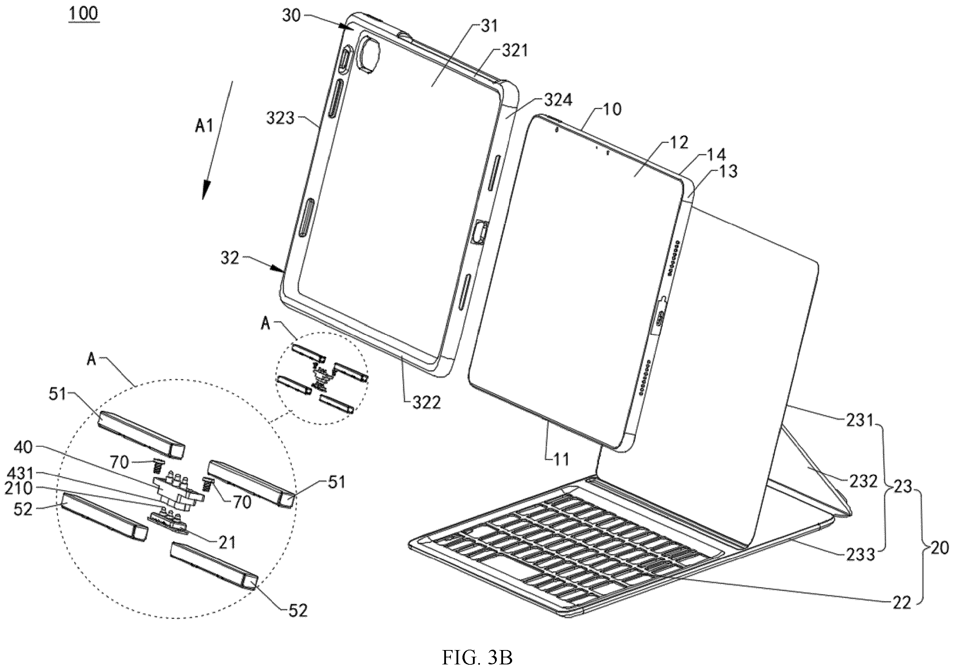

With reference to FIG. 2, FIG. 3A, and FIG. 3B, FIG. 3A is a diagram of a decomposed structure of the electronic device 100 shown in FIG. 2, and FIG. 3B is a diagram of another decomposed structure of the electronic device 100 shown in FIG. 2. In FIG. 3B, a structure at a place A is enlarged. A through hole (not shown in FIG. 3B) is provided on a second side part 322 of a main body 30, and a first magnetic component 51, a fastener 70, and an adapter 40 in the structure at the place A are located in the through hole. The electronic device 100 may include an adapt case 300, and the adapt case 300 surrounds at least a part of a frame 13. The adapt case 300 may include the main body 30, and the main body 30 may be made of plastic, silicone, or the like. The main body 30 may surround at least the part of the frame 13. It may be understood that the main body 30 may surround the part of the frame 13 or the entire frame 13 of the host 10, or the main body 30 may surround a part of a cover 14 or an entire cover 14. The electronic device 100 shown in FIG. 1 may also be provided with the adapt case 300, which is merely not shown in FIG. 1.

In some embodiments, an integrated structure formed after the host 10 is cased by the adapt case 300 may be mounted on the external keyboard 20, and appearance dimensions of the adapt case 300 adapt to a support component of the external keyboard 20. In this way, the appearance dimensions of the adapt case 300 may be basically consistent with dimensions of the support component 23 of the external keyboard 20.

In an embodiment of this application, an example in which the main body 30 surrounds the entire frame 13 and the entire cover 14 is used for description. The main body 30 may include a main part 31 and a side part 32. The main part 31 is disposed opposite to a display 12, and the main part 31 is located on a side that is of the cover 14 and that is away from the display 12. The side part 32 is disposed around the main part 31, and the side part 32 surrounds the frame 13. For example, there may be four side parts 32: a first side part 321 and a second side part 322 that are disposed opposite to each other, and a third side part 323 and a fourth side part 324 that are disposed opposite to each other. An arrangement direction of the first side part 321 and the second side part 322 is a first direction A1. In the first direction A1, dimensions of the first side part 321 and the second side part 322 may be the same or different, and the dimensions of the first side part 321 and the second side part 322 may be set based on a requirement. Similarly, dimensions of the third side part 323 and the fourth side part 324 may also be the same or different. The second side part 322 and the keyboard part 22 of the external keyboard 20 may be interconnected. The host 10 is located between the first side part 321 and the second side part 322, and the host 10 is also located between the third side part 323 and the fourth side part 324. In an embodiment of this application, an example in which the first side part 321 and the second side part 322 are located on the upper and lower sides of the host 10, and the third side part 323 and the fourth side part 324 are located on the left and right sides of the host 10 is used. In another embodiment, the first side part 321 and the second side part 322 may alternatively be located on the left and right sides of the host 10, and the third side part 323 and the fourth side part 324 are located on the upper and lower sides of the host 10.

In some embodiments, the main body 30 may include a side part 32 but include no main part 31, and there may be one, two, three, side parts 32 or the like. In other words, the main body 30 surrounds a part of the frame 13.

Currently, the shape and the dimension of the external keyboard 20 are generally set correspondingly matching the host 10. If the dimension of the host 10 is inconsistent with the dimension of the external keyboard 20, integrity of cooperation between the external keyboard 20 and the host 10 is poor, and an overall appearance of the electronic device 100 is not harmonious. If the dimension of the host 10 is inconsistent with the dimension of the external keyboard 20, when the electronic device 100 undergoes external impact, an impact force undertook by the host 10 differs greatly from that undertook by the external keyboard 20, and the host 10 is likely to be separated from the external keyboard 20 to fall off. As a result, the host 10 is likely to be damaged.

In this embodiment of this application, the adapt case 300 is disposed to surround at least the part of the frame 13 of the host 10, the adapt case 300 and the host 10 form the host body, and a dimension of the host body is greater than the dimension of the host 10. The dimension of the main body 30 of the adapt case 300 is easily adjusted and changed, and the dimension of the host body may also be adjusted based on a requirement. For example, when a host body in a large dimension needs to adapt to the external keyboard 20, the dimension of the main body 30 of the adapt case 300 may be large. To be specific, a dimension of the first side part 321 in the first direction A1 and a dimension of the second side part 322 in the first direction A1 may be large, and dimensions of the third side part 323 and the fourth side part in a direction perpendicular to the first direction A1 may be large, to increase a thickness of the main body 30. A host 10 having a same dimension as that of the external keyboard 20 may adapt to the external keyboard 20. When the dimension of the host 10 is smaller than the dimension of the external keyboard 20, the adapt case 300 is disposed to surround the host 10. In this way, an overall dimension of the host 10 and the adapt case 300 (namely, a dimension of the host body) can adapt to the external keyboard 20. This resolves problems of poor integrity of cooperation between the host 10 and the external keyboard 20 and poor aesthetic harmony of the electronic device that are caused by inconsistent dimensions of the host 10 and the external keyboard 20.

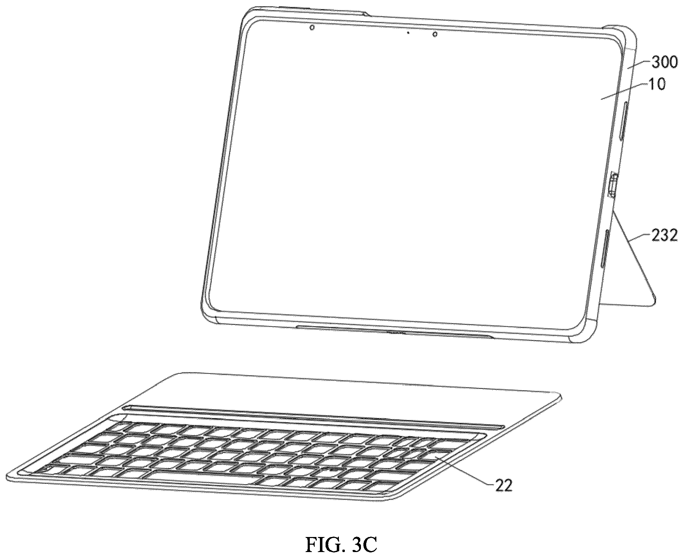

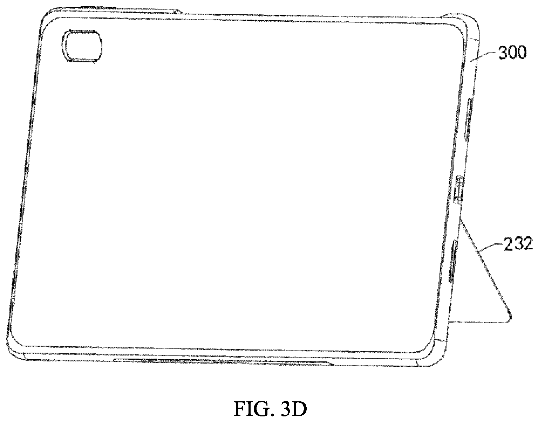

With reference to FIG. 3C and FIG. 3D, FIG. 3C is a diagram of a structure of the host 10, the adapt case 300, and the second support part 232, and FIG. 3D is a diagram of a structure of the adapt case 300 and the second support part 232. There is no host 10 in FIG. 3D. The adapt case 300 may be connected to the second support part 232 to form an integrated structure. The second support part 232 provides support for the adapt case 300. The adapt case 300 and the second support part 232 that are connected as the integrated structure may be separated from the keyboard part 22, and the host 10 may be cased by the adapt case 300.

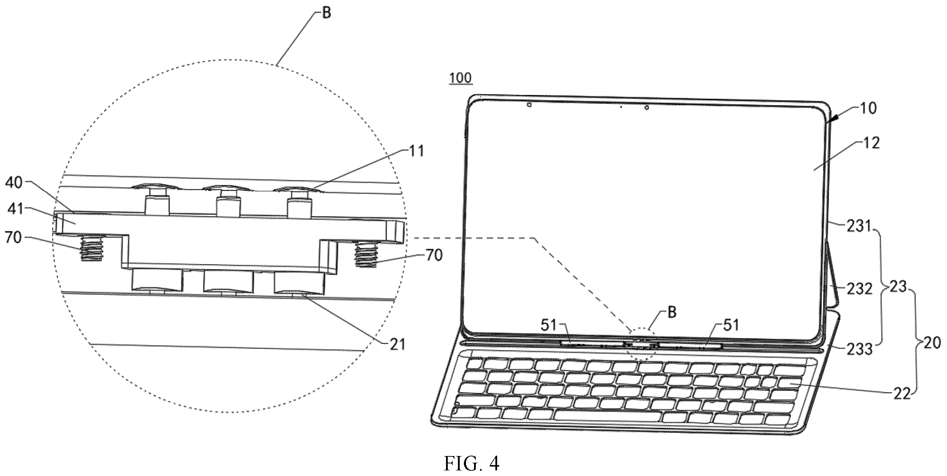

As shown in FIG. 3B and FIG. 4, FIG. 4 is a diagram of a part of the structure of the electronic device 100 shown in FIG. 2. Specifically, FIG. 4 is a diagram of the structure of the electronic device 100 shown in FIG. 2 and that is obtained after the main body 30 is removed. In FIG. 4, a structure at a place B is enlarged. The keyboard part 22 of the external keyboard 20 may be electrically connected to the host 10, to implement power supply and signal transmission between the external keyboard 20 and the host 10. A communicative connection is established between the external keyboard 20 and the host 10, to ensure typing or another command input by the external keyboard 20. The external keyboard 20 is in a power-supply connection to the host 10, so that the external keyboard 20 and the host 10 can supply power to each other. This avoids a case in which the external keyboard 20 and the host 10 cannot be used together when either of the external keyboard 20 and the host 10 is low on power. The external keyboard 20 may be electrically connected to the host 10 through a conductive wire, a connector, a Bluetooth wireless connection, or the like. In this application, an example in which the external keyboard 20 is electrically connected to the host 10 through the connector is used for description.

The host 10 may include a first contact. The first contact may be a first connector 11. The first connector 11 may be disposed on the back of the host 10 and a part of the cover 14 is exposed. Alternatively, the first connector 11 may be disposed on a side part of the host 10 and a part of the frame 13 is exposed. In an embodiment of this application, an example in which the first connector 11 is located at the side part of the host 10 and is close to the keyboard part 22 is used for description. The first connector 11 may include at least two conductive parts (not shown in FIG. 3B), and the at least two conductive parts are electrically connected to the external keyboard 20, to implement power supply and communication between the host 10 and the external keyboard 20. At least one of the conductive parts can implement power supply, and the remaining of the conductive parts can implement communication.

The external keyboard 20 may include a second contact. The second contact may be a second connector 21. The first connector 11 may be in contact with and electrically connected to the second connector 21, or the first connector 11 may be electrically connected to the second connector 21 through another mechanical part (for example, the adapter 40), to implement communication and a power-supply connection between the host 10 and the external keyboard 20. The second connector 21 may be flush with or protrude from a surface that is of the keyboard part 22 and that faces the host 10.

With reference to FIG. 3B and FIG. 4, the adapt case 300 may include the adapter 40, and the adapter 40 may be embedded into the main body 30. For example, the main body 30 is provided with a through hole (not shown in FIG. 3B), and the adapter 40 is located in the through hole. The adapter 40 may be fastened into the main body 30 by using the fastener 70. The fastener 70 may be a screw, a bolt, or the like. The adapter 40 may alternatively be bonded to the main body 30 by using adhesive. One end of the adapter 40 may be in contact with and electrically connected to the first connector 11 of the host 10, and the other end of the adapter 40 may be configured to be in contact with and electrically connected to the second connector 21 of the external keyboard 20. The second side part 322 of the main body 30 is located between the first connector 11 and the second connector 21, and the second side part 322 has a thickness in the first direction A1. This increases a spacing between the first connector 11 and the second connector 21, and affects contact and a connection between the first connector 11 and the second connector 21. Generally, the adapter 40 may be disposed in the electronic device 100. For example, the adapter 40 is embedded into the second side part 322, to implement an electrical connection between the first connector 11 and the second connector 21. This ensures a stable electrical connection between the host 10 and the external keyboard 20, and increases reliability of a connection between the host 10 and the external keyboard 20.

When a location of the first connector 11 is changed, the adapter 40 may be located at another side part, or the adapter 40 may be located at the main part 31. A location of the adapter 40 in the main body 30 is not limited in embodiments of this application. For example, when the first connector 11 is disposed at the back of the host 10 and the part of the cover 14 is exposed, the adapter 40 may be embedded into the main part 31. In this way, the adapter 40 and the first connector 11 are in good contact and well fitted with each other. When the first connector 11 is disposed at the side part of the host 10 and the part of the frame 13 is exposed, the adapter 40 may be embedded into the side part 32. In this way, the adapter 40 and the first connector 11 are in good contact and well fitted with each other.

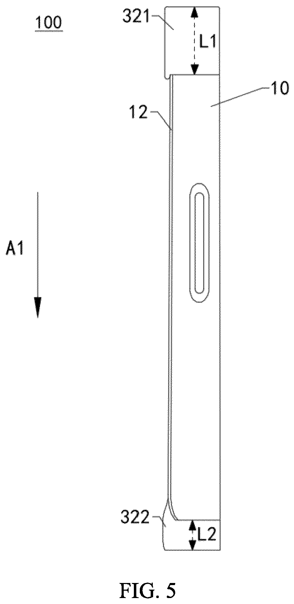

With reference to FIG. 4 and FIG. 5, FIG. 5 is a diagram of the structure of the electronic device 100. The adapter 40 may be embedded into the second side part 322, and a dimension L1 of the first side part 321 in the first direction A1 is greater than a dimension L2 of the second side part 322 in the first direction A1. L1 indicates a distance, in the first direction A1, from a side that is of the first side part 321 and that faces the host 10 to a side that is of the first side part 321 and that is away from the host 10. The dimension of the first side part 321 in the first direction A1 does not include a dimension of a part folded to the display 12. L2 indicates a distance, in the first direction A1, from a side that is of the second side part 322 and that faces the host 10 to a side that is of the second side part 322 and that is away from the host 10. The dimension L2 of the second side part 322 in the first direction A1 does not include a dimension of a part folded to the display 12. If the dimension of the second side part 322 in the first direction A1 increases, a dimension of the adapter 40 embedded into the second side part 322 in the first direction A1 also needs to increase, to ensure electrical connections between the adapter 40 and each of the first connector 11 and the second connector 21. The increase in the dimension of the adapter 40 results in an increase in production costs of the adapter 40. In embodiments of this application, a thickness of the second side part 322 is set to be less than a thickness of the first side part 321. In other words, a small-dimension second side part 322 is disposed to reduce the dimension of the adapter 40. This reduces the production costs of the adapter 40, and enables a sum of dimensions of the first side part 321, the host 10, and the second side part 322 in the first direction A1 to adapt to a dimension of a keyboard, thereby ensuring aesthetic harmony between the host 10 and the external keyboard 20.

With reference to FIG. 3B and FIG. 4, the electronic device 100 may include the first magnetic component 51 and a second magnetic component 52. The first magnetic component 51 may be located at the main body 30. The second magnetic component 52 may be located at the external keyboard 20. Attraction exists between the first magnetic component 51 and the second magnetic component 52.

The attraction between the first magnetic component 51 and the second magnetic component 52 may have a function of positioning or adsorption and fastening. The first magnetic component 51 is disposed in the main body 30. Compared with that in an existing solution in which the first magnetic component is disposed in the host 10, this can save internal space of the host 10, improve space utilization of the host 10, and provide sufficient space for disposing another component in the host 10. In an embodiment of this application, an example in which the first magnetic component 51 is disposed close to the adapter 40, and the second magnetic component 52 is disposed close to the second connector 21 is used for description. The first magnetic component 51 may be embedded into the second side part 322, and the second magnetic component 52 may be located at the third support part 233. The first magnetic component 51 and the second magnetic component 52 are disposed to implement a positioning function, to implement good interconnections between the adapter 40 and the first connector 11 and between the adapter 40 and the second connector 21.

In another embodiment, the first magnetic component 51 may alternatively be located at another location of the main body 30. For example, the first magnetic component 51 may alternatively be disposed in at least one of the first side part 321, the third side part 323, the fourth side part 324, and the main part 31, and the second magnetic component 52 may alternatively be disposed in the first support part 231. The first magnetic component 51 and the second magnetic component 52 are disposed to implement a fastening function, so that the host 10 is securely and detachably fastened to the external keyboard 20. This improves reliability of the electronic device 100 during use. A quantity of first magnetic components 51 and a quantity of second magnetic components 52 may be set based on a requirement. This is not limited in this application. The two first magnetic components 51 and the two second magnetic components 52 in FIG. 3B are merely examples.

A structure of the adapter 40 may be set based on a requirement. In embodiments of this application, four solutions are used as examples to describe the structure of the adapter 40. It may be understood that the adapter 40 may be another structure other than that in the four solutions. The structure of the adapter 40 is not limited in this application.

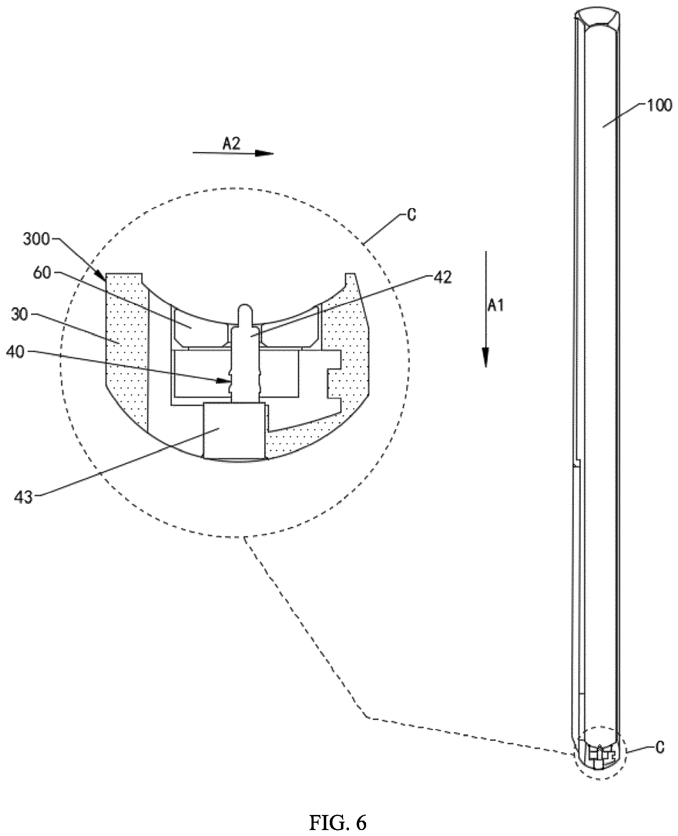

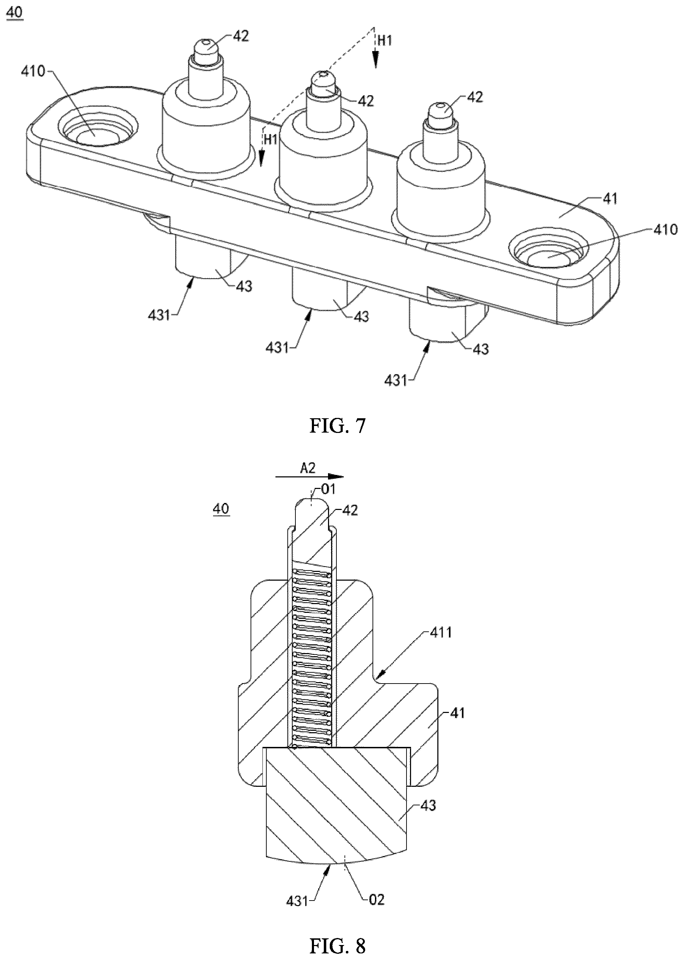

Solution 1: With reference to FIG. 6, FIG. 7, and FIG. 8, FIG. 6 is a diagram of a structure of an electronic device 100. The electronic device 100 shown in FIG. 6 includes a host and an adapt case. FIG. 7 is a diagram of a structure of an adapter 40. FIG. 8 is a sectional view of the adapter shown in FIG. 7 at a place H1-H1. In FIG. 6, a structure at a place C is enlarged. The adapter 40 shown in FIG. 7 and FIG. 8 may be completely the same as an adapter 40 in FIG. 6, or may have some structural adjustments. In an embodiment of this application, the adapter 40 shown in FIG. 7 and FIG. 8 is not completely the same as the adapter 40 in FIG. 6.

The adapter 40 may include a carrier 41, an elastic part 42, and an adapter part 43. The elastic part 42 may be elastically connected between a first connector 11 and a second connector 21. The elastic part 42 may be a spring-loaded pin. The elastic part 42 is elastic and can be compressed. The elastic part 42 may be elastically connected in an abutting manner between the first connector 11 and the second connector 21, so that the adapter 40 and the first connector 11 and the adapter 40 and the second connector 21 are separately in fuller and stabler contact. In this way, an external keyboard 20 and a host 10 are in good contact and well fitted with each other. A dimension of the elastic part 42 in a first direction A1 may be adjusted based on a requirement, to ensure electrical connections between the adapter 40 and the first connector 11 and between the adapter 40 and the second connector 21.

With reference to FIG. 3B, FIG. 7, and FIG. 8, the adapter part 43 and the elastic part 42 may be an integrated structure, or may be fastened in a manner like soldering. The adapter part 43 may be electrically connected between the elastic part 42 and the second connector 21. An area of a surface 431 that is of the adapter part 43 and that faces the second connector 21 is greater than or equal to an area of a surface 210 that is of the second connector 21 and that faces the adapter part 43. There may be one, two, or three adapter parts 43, or the like. The adapter part 43 may be a circuit board, a metal sheet, or the like. A dimension of the adapter part 43 may be large. When the adapter part 43 and the second connector 21 are interconnected, even if a specific deviation or misplacement exists, the adapter part 43 can still be electrically connected to the second connector 21 (if a region in which the adapter 40 and the second connector 21 are interconnected is small and a misplacement occurs when the adapter 40 and the second connector 21 are interconnected, the adapter 40 cannot be in contact with the second connector 21). This helps reduce difficulty in interconnecting the adapter 40 and the second connector 21, and improve reliability of contact between the adapter 40 and the second connector 21. A shape of the surface 431 that is of the adapter part 43 and that faces the second connector 21 may be consistent with that of an appearance surface of the main body 30, to ensure electrical connections between the adapter 40 and the first connector 11 and between the adapter 40 and the second connector 21. In another embodiment, two adapter parts 43 may alternatively be disposed. One adapter part 43 is electrically connected between the elastic part 42 and the second connector 21, and the other adapter part 43 may also be electrically connected between the elastic part 42 and the first connector 11. An area of a surface that is of the adapter part 43 and that faces the first connector 11 may be set to be greater than or equal to an area of a surface that is of the first connector 11 and that faces the adapter part 43, to reduce difficulty in interconnecting the adapter 40 and the first connector 11, and improve reliability of contact between the adapter 40 and the first connector 11.

In some embodiments, a surface that is of the adapter 40 and that faces the host 10 adapts to an appearance of the host 10. An accommodating slot may be disposed on the external keyboard 20. The second connector 21 may be disposed in the accommodating slot, and a surface that is of the adapter 40 and that faces the external keyboard 20 may adapt to an appearance of the accommodating slot of the external keyboard 20.

It may be understood that, in some embodiments, an adapter part 43 may be disposed between the elastic part 42 and the second connector 21, and an adapter part 43 may be disposed between the elastic part 42 and the first connector 11.

With reference to FIG. 4 and FIG. 7, accommodation space is provided inside the carrier 41. At least a part of the elastic part 42 may be located at the carrier 41, and the carrier 41 may be fastened to the main body 30. At least a part of a structure of the elastic part 42 may be embedded into the carrier 41 in a manner like interference fit, adhesive bonding, or a screw. The carrier 41 can limit a location of the elastic part 42, to implement functions of fastening and protection. A part of the adapter part 43 may also be fastened into the carrier 41. The carrier 41 is provided with a mounting hole 410, and the fastener 70 may pass through the mounting hole 410 to fasten the carrier 41 to the main body 30, to implement fastening of the adapter 40 to the main body 30. The fastener 70 has high fastening reliability, and can prevent movement of the adapter 40 from affecting contact between the adapter 40 and the first connector 11 and between the adapter 40 and the second connector 21.

With reference to FIG. 7, the carrier 41 may be provided with a step structure 411. When the carrier 41 is mounted in the main body 30, the step structure 411 may cooperate with space in the main body 30 to implement a positioning function.

With reference to FIG. 6 and FIG. 8, a projection, in a second direction, of a center of a surface that is of the adapter 40 and that faces the first connector 11 does not coincide with a projection, in the second direction A2, of a center of a surface that is of the adapter 40 and that faces the second connector 21, and the second direction A2 is perpendicular to the display 12. For example, the adapter 40 includes the elastic part 42 and the adapter part 43. The center of the surface that is of the adapter 40 and that faces the first connector 11 is a center O1 of the surface that is of the elastic part 42 and that faces the first connector 11, and the center of the surface that is of the adapter 40 and that faces the second connector 21 is a center O2 of the surface 431 that is of the adapter part 43 and that faces the second connector 21. A projection, in the second direction, of the center O1 of the surface that is of the elastic part 42 and that faces the first connector 11 does not coincide with a projection, in the second direction, of the center O2 of the surface 431 that is of the adapter part 43 and that faces the second connector 21. In other words, the center O1 of the surface that is of the elastic part 42 and that faces the first connector 11 and the center O2 of the surface 431 that is of the adapter part 43 and that faces the second connector 21 are spaced or disposed in a staggered manner in the second direction A2.

The center of the surface that is of the adapter 40 and that is in contact with the first connector 11 is deviated from the center of the surface that is of the adapter 40 and that is in contact with the second connector 21 in the second direction A2. This helps improve contact reliability of two sides of the adapter 40 and help improve a reuse rate of the external keyboard 20. A location of the second connector 21 of the external keyboard 20 is preset, and the main body 30 has a thickness. As a result, a hole for mounting the second connector on the external keyboard 20 may not be directly aligned with a hole for mounting the first connector 11 on the host 10, and a misplacement exists. In this case, poor contact occurs in the electrical connection between the adapter 40 and the first connector 11 or the electrical connection between the adapter 40 and the second connector 21. In the second direction A2, the projection, in the second direction, of the center of the surface that is of the adapter 40 and that faces the first connector 11 does not coincide with the projection, in the second direction, of the center of the surface that is of the adapter 40 and that faces the second connector 21. In this way, two ends of the adapter 40 have a specific deviation that adapts to the hole with the misplacement. This helps ensure that the adapter 40 can implement an electrical connection to each of the first connector 11 and the second connector 21, thereby improving contact reliability of the two ends of the adapter 40.

With reference to FIG. 6, the adapt case 300 includes a buffer component 60. The buffer component 60 may be located at an end that is of the adapter 40 and that faces the host 10. For example, the buffer component 60 may be disposed around the elastic part 42. Alternatively, the buffer component 60 may be located at an end that is of the adapter 40 and that faces the external keyboard 20 (which may also be understood as an end that is of the adapter 40 and that is away from the host 10). For example, the buffer component 60 may be disposed around the adapter part 43. FIG. 6 is described by using an example in which the buffer component 60 is located at the end that is of the adapter 40 and that faces the host 10. A material of the buffer component 60 generally has a deformation capability, and the buffer component 60 may be made of a material, for example, soft glue or foam. Due to factors such as a design tolerance, the adapter 40 may not be fully attached to the main body 30, and there may be a gap. If the buffer component 60 is not disposed, when the electronic device 100 is viewed in the first direction A1, the gap between the adapter 40 and the main body 30 is seen, which affects an appearance of the electronic device 100. The buffer component 60 is disposed to fill the gap around the adapter 40, so that the electronic device 100 has a better appearance, and external impurities are prevented from entering the main body 30 and the host 10 through the gap. In addition, the rigid adapter 40 may damage the host 10. The buffer component 60 may protect the host 10, and can prevent the adapter 40 from scratching an outer surface of the host 10. In another embodiment, when the buffer component 60 is located at the end that is of the adapter 40 and that faces the external keyboard 20, the adapter 40 can be prevented from damaging the external keyboard 20.

In some embodiments, the adapter 40 may not be provided with the carrier 41 or the adapter part 43. A structure of the adapter 40 may be designed and adjusted based on a requirement. This is not limited in embodiments of this application.

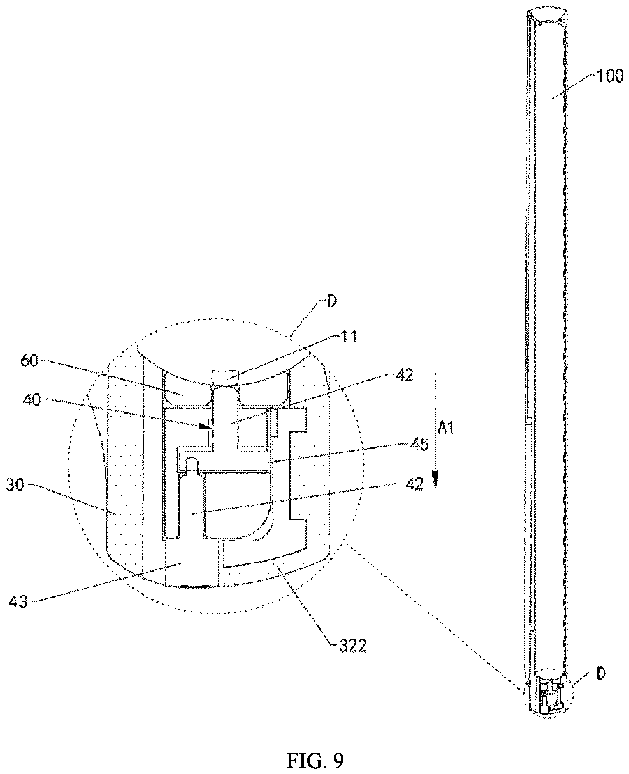

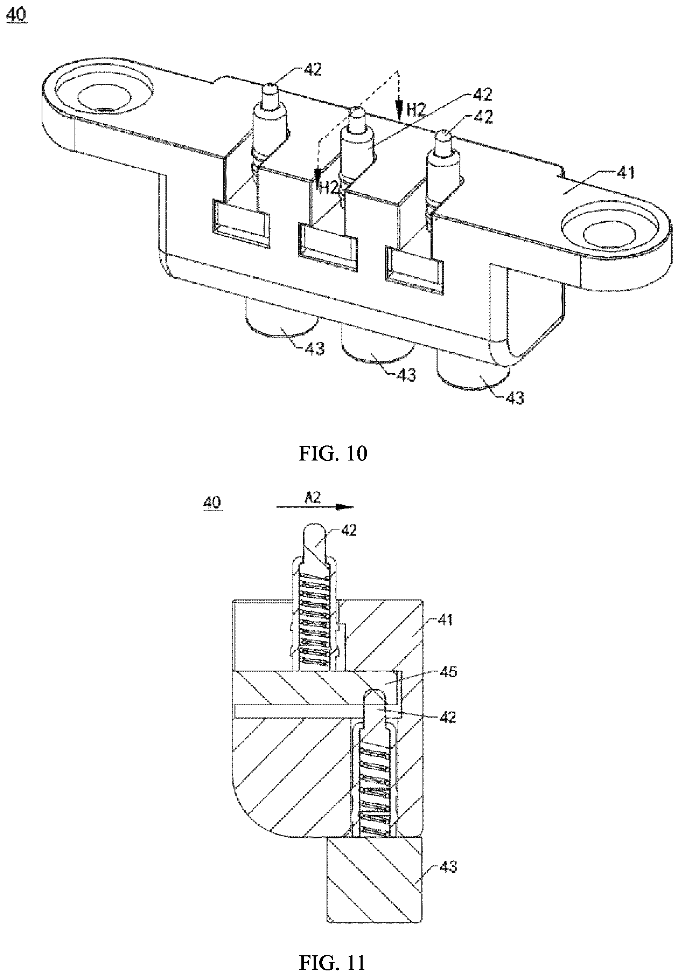

Solution 2: As shown in FIG. 9, FIG. 10, and FIG. 11, FIG. 9 is a diagram of a structure of another electronic device 100. The electronic device 100 shown in FIG. 9 includes a host and an adapt case. FIG. 10 is a diagram of a structure of an adapter 40. FIG. 11 is a sectional view of the adapter 40 shown in FIG. 10 at a place H2-H2. In FIG. 9, a structure at a place D is enlarged. An adapter 40 shown in FIG. 10 and FIG. 11 may be completely the same as an adapter 40 in FIG. 9, or may have some structural adjustments. In an embodiment of this application, the adapter 40 shown in FIG. 10 and FIG. 11 is not completely the same as the adapter 40 in FIG. 9.

There may be one or at least two elastic parts 42, or the like. When a dimension of a second side part 322 of a main body 30 in a first direction A1 is large, a dimension of the adapter 40 in the first direction A1 needs to be increased. The dimension of the adapter 40 in the first direction A1 may be increased by increasing the quantity of elastic parts 42. In an embodiment of this application, an example the quantity of elastic parts 42 is two is used for description. The two elastic parts 42 are arranged in the first direction A1, so that the dimension of the adapter 40 in the first direction A1 can be increased, and the two elastic parts 42 are electrically connected. The two elastic parts 42 may be in direct contact and a direct connection, or may be indirectly connected through a connection component 45. An elastic part 42 far away from the adapter part 43 may be connected to the connection component 45 through soldering, and an elastic part 42 close to the adapter part 43 may be in contact with and connected to the connection component 45.

In an embodiment of this application, a center of a surface that is of the adapter 40 and that faces a first connector 11 and a center of a surface that is of the adapter 40 and that faces a second connector 21 may be spaced (that is, disposed in a staggered manner) in a second direction A2, or may not be disposed in the staggered manner provided that the quantity of elastic parts 42 is increased.

For other designs of the adapters 40 shown in FIG. 9 to FIG. 11, refer to the designs of the adapters 40 shown in FIG. 6 to FIG. 8. Details are not described herein again.

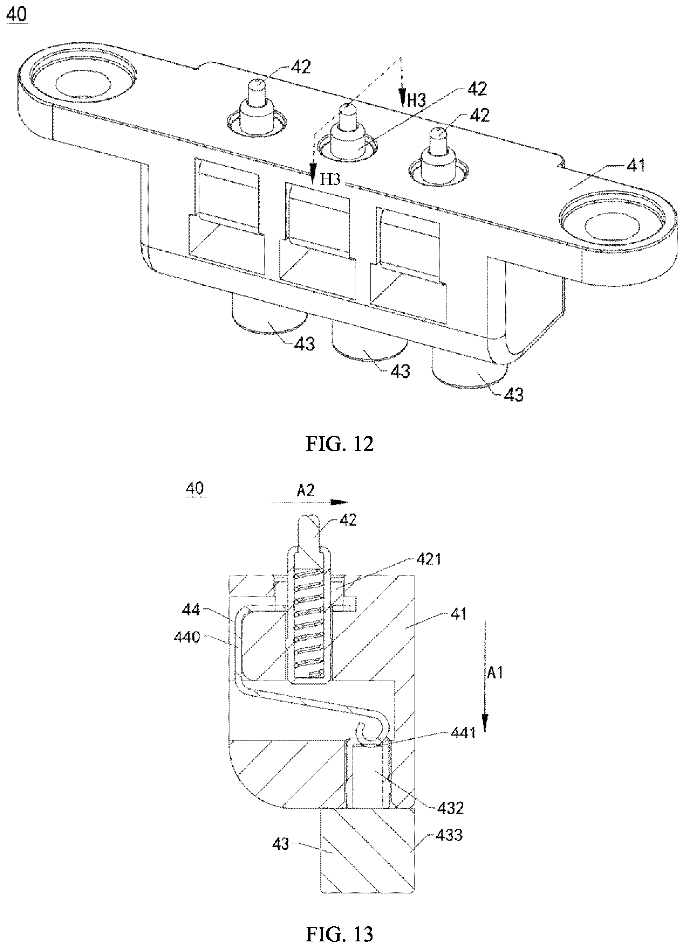

Solution 3: As shown in FIG. 12 and FIG. 13, FIG. 12 is a diagram of a three-dimensional structure of another adapter 40, and FIG. 13 is a sectional view of the adapter 40 shown in FIG. 12 at a place H3-H3.

The adapter 40 may further include a connection part 44. The connection part 44 may be in contact with and electrically connected between an elastic part 42 and an adapter part 43, and the adapter part 43 may be electrically connected between the connection part 44 and a second connector 21. The connection part 44 may be a metal sheet 440. The metal sheet 440 may be electrically connected to the elastic part 42 and the adapter part 43. The metal sheet 440 metal is disposed to increase a dimension of the adapter 40 in a first direction A1, so that the adapter 40 can adapt to main bodies 30 of different dimensions, and an external keyboard 20 can adapt to more hosts 10 of different dimensions. The metal sheet 440 may have an elastic deformation capability, and may be a metal spring. When the metal sheet 440 is mounted between the elastic part 42 and the second adapter part 43, the metal sheet 440 may be compressed. When the adapter 40 is mounted between a first connector and the second connector, a dimension of the metal sheet in the first direction A1 remains unchanged, and the elastic part 42 is compressed.

A surface that is of the metal sheet 440 and that faces the adapter part 43 may be an arc surface 441, and the arc surface 441 is in contact with and electrically connected to the adapter part 43. The metal sheet 440 may be embedded into the elastic part 42 through interference fit, or may be soldered to a surface of the elastic part 42. This can implement a stable connection between the connection part 44 and the elastic part 42. The connection part 44 and the adapter part 43 may be connected through pressing or soldering. The arc surface 441 is disposed to ensure that at least one line between the metal sheet 440 and the adapter part 43 is in good contact. This helps maintain good electrical contact between the external keyboard 20 and the host 10.

With reference to FIG. 13, a protrusion part 421 may be disposed on the surface of the elastic part 42, and the protrusion part 421 may be clamped to a carrier 41 to implement mounting positioning of the elastic part 42 and the carrier 41.

With reference to FIG. 13, the adapter part 43 may include a first part 432 and a second part 433. The first part 432 is in contact with and electrically connected to the connection part 44. In a second direction A2, a dimension of the second part 433 may be greater than a dimension of the first part 432. The adapter part 43 may be embedded into the carrier 41 through clamping or in-mold decoration based on space of the carrier 41. The carrier 41 has a fastening function on the adapter part 43, and can improve contact reliability of the adapter 40.

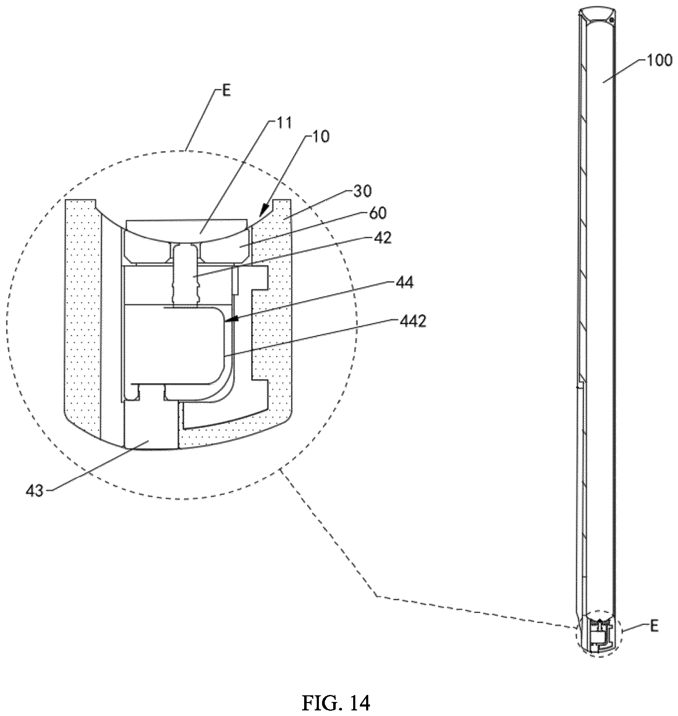

Solution 4: FIG. 14 is a diagram of a structure of another electronic device 100. In FIG. 14, a structure at a place E is enlarged. In this application, an example in which a connection part 44 is a flexible circuit board 442 is used for description. The flexible circuit board 442 may be fastened to an elastic part 42 in a manner of soldering, clamping, or the like. The flexible circuit board 442 may be provided with at least one bend based on internal space of a host 10. In another embodiment, the flexible circuit board 442 may not be provided with a bent part.

The foregoing descriptions are merely specific implementations of this application, but are not intended to limit the protection scope of this application. Therefore, the protection scope of this application shall be subject to the protection scope of the claims.

## Claims

1. An electronic device (100), comprising a host (10) and an adapt case (300), wherein the host (10) comprises a cover (14), a frame (13), and a display (12), the cover (14) and the display (12) are located on two opposite sides of the frame (13), and the adapt case (300) surrounds at least a part of the frame (13); and
the adapt case (300) comprises an adapter (40), one end of the adapter (40) is configured to be in contact with and electrically connected to the host (10), and the other end of the adapter (40) is configured to be in contact with and electrically connected to an external keyboard (20),
**characterised in that**
the adapt case (300) further comprises a buffer component (60), and the buffer component (60) is located at an end that is of the adapter (40) and that faces the host (10), or the buffer component (60) is located at an end that is of the adapter (40) and that faces the external keyboard (20).

2. The electronic device (100) according to claim 1, wherein the adapt case (300) comprises a main part (31) and a side part, the side part is disposed around the main part (31), the main part (31) is on a side that is of the cover (14) and that is away from the display (12), the side part surrounds at least the part of the frame (13), and the adapter (40) is embedded into the main part (31) or the side part.

3. The electronic device (100) according to claim 1 or 2, wherein the adapt case (300) comprises a first side part (321) and a second side part (322) that are disposed opposite to each other, the host (10) is located between the first side part (321) and the second side part (322), the adapter (40) is embedded into the second side part (322), a dimension of the first side part (321) in a first direction is greater than a dimension of the second side part (322) in the first direction, and the first direction is an arrangement direction of the first side part (321) and the second side part (322).

4. The electronic device (100) according to any one of claims 1 to 3, wherein the electronic device (100) comprises a first magnetic component (51) and a second magnetic component (52), the first magnetic component (51) is located at the adapt case (300), the second magnetic component (52) is located at the keyboard, and attraction exists between the first magnetic component (51) and the second magnetic component (52).

5. The electronic device (100) according to any one of claims 1 to 4, wherein the adapter (40) comprises an elastic part (42), and the elastic part (42) is elastically connected between the host (10) and the external keyboard (20).

6. The electronic device (100) according to claim 5, wherein the adapter (40) comprises an adapter part (43); and
the adapter part (43) is electrically connected between the elastic part (42) and a second contact of the keyboard, and an area of a surface that is of the adapter part (43) and that faces the second contact is greater than or equal to an area of a surface that is of the second contact and that faces the adapter part (43); or
the adapter part (43) is electrically connected between the elastic part (42) and a first contact of the host (10), and an area of a surface that is of the adapter part (43) and that faces the first contact is greater than or equal to an area of a surface that is of the first contact and that faces the adapter part (43).

7. The electronic device (100) according to any one of claims 1 to 6, wherein a projection, in a second direction, of a center of a surface that is of the adapter (40) and that faces the host (10) does not coincide with a projection, in the second direction, of a center of a surface that is of the adapter (40) and that faces the external keyboard (20), and the second direction is perpendicular to the display (12).

8. The electronic device (100) according to any one of claims 5 to 7, wherein the adapter (40) comprises the adapter part (43) and a connection part (44), the connection part (44) is electrically connected between the elastic part (42) and the adapter part (43), and the adapter part (43) is electrically connected between the connection part (44) and the external keyboard (20).

9. The electronic device (100) according to claim 8, wherein the connection part (44) is a flexible circuit board (442) or a metal sheet (440).

10. An adapt case (300), for use with an electronic device (100) comprising a host (10) and an external keyboard (20), wherein the adapt case (300) comprises a main body (30) and an adapter (40), the adapter (40) is embedded into the main body (30), the main body is configured to surround at least a part of a frame (13) of the host (10), one end of the adapter (40) is configured to be in contact with and electrically connected to the host (10), and the other end of the adapter (40) is configured to be in contact with and electrically connected to the external keyboard (20),
**characterised in that**
the adapt case (300) further comprises a buffer component (60), and the buffer component (60) is located at an end that is of the adapter (40) and that faces the host (10), or the buffer component (60) is located at an end that is of the adapter (40) and that is away from the host (10).

11. The adapt case (300) according to claim 10, wherein the main body (30) comprises a main part (31) and a side part, the side part is disposed around the main part (31), the side part surrounds at least the part of the frame (13), and the adapter (40) is embedded into the main part (31) or the side part.

12. The adapt case (300) according to claim 10 or 11, wherein the main body (30) comprises a first side part (321) and a second side part (322) that are disposed opposite to each other, the host (10) is located between the first side part (321) and the second side part (322), the adapter (40) is embedded into the second side part (322), a dimension of the first side part (321) in a first direction is greater than a dimension of the second side part (322) in the first direction, and the first direction is an arrangement direction of the first side part (321) and the second side part (322).

13. The adapt case (300) according to any one of claims 10 to 12, wherein the adapter (40) comprises an elastic part (42), and the elastic part (42) is elastically connected between the host (10) and the external keyboard (20).

## Patentansprüche

1. Elektronische Vorrichtung (100), umfassend einen Host (10) und ein Adaptiergehäuse (300) umfasst, wobei der Host (10) eine Abdeckung (14), einen Rahmen (13) und eine Anzeige (12) umfasst, sich die Abdeckung (14) und die Anzeige (12) auf zwei gegenüberliegenden Seiten des Rahmens (13) befinden und das Adaptiergehäuse (300) mindestens einen Teil des Rahmens (13) umgibt; und
das Adaptiergehäuse (300) einen Adapter (40) umfasst, ein Ende des Adapters (40) dazu konfiguriert ist, mit dem Host (10) in Kontakt zu stehen und mit diesem elektrisch verbunden zu sein, und das andere Ende des Adapters (40) dazu konfiguriert ist, mit einer externen Tastatur (20) in Kontakt zu stehen und mit dieser elektrisch verbunden zu sein,
**dadurch gekennzeichnet, dass**
das Adaptiergehäuse (300) ferner eine Pufferkomponente (60) umfasst, und sich die Pufferkomponente (60) an einem Ende befindet, das von dem Adapter (40) stammt und das dem Host (10) zugewandt ist, oder sich die Pufferkomponente (60) an einem Ende befindet, das von dem Adapter (40) stammt und das der externen Tastatur (20) zugewandt ist.

2. Elektronische Vorrichtung (100) nach Anspruch 1, wobei das Adaptiergehäuse (300) einen Hauptteil (31) und einen Seitenteil umfasst, der Seitenteil um den Hauptteil (31) herum angeordnet ist, der Hauptteil (31) auf einer Seite liegt, die von der Abdeckung (14) stammt und von der Anzeige (12) entfernt ist, der Seitenteil mindestens den Teil des Rahmens (13) umgibt und der Adapter (40) in den Hauptteil (31) oder den Seitenteil eingebettet ist.

3. Elektronische Vorrichtung (100) nach Anspruch 1 oder 2, wobei das Adaptiergehäuse (300) einen ersten Seitenteil (321) und einen zweiten Seitenteil (322) umfasst, die gegenüber einander angeordnet sind, sich der Host (10) zwischen dem ersten Seitenteil (321) und dem zweiten Seitenteil (322) befindet, der Adapter (40) in den zweiten Seitenteil (322) eingebettet ist, eine Abmessung des ersten Seitenteils (321) in einer ersten Richtung größer als eine Abmessung des zweiten Seitenteils (322) in der ersten Richtung ist, und die erste Richtung eine Anordnungsrichtung des ersten Seitenteils (321) und des zweiten Seitenteils (322) ist.

4. Elektronische Vorrichtung (100) nach einem der Ansprüche 1 bis 3, wobei die elektronische Vorrichtung (100) eine erste magnetisches Komponente (51) und eine zweite magnetische Komponente (52) umfasst, sich die erste magnetische Komponente (51) an dem Adaptiergehäuse (300) befindet, sich die zweite magnetische Komponente (52) an der Tastatur befindet und zwischen der ersten magnetischen Komponente (51) und der zweiten magnetischen Komponente (52) eine Anziehung besteht.

5. Elektronische Vorrichtung (100) nach einem der Ansprüche 1 bis 4, wobei der Adapter (40) einen elastischen Teil (42) umfasst, und der elastische Teil (42) elastisch zwischen dem Host (10) und der externen Tastatur (20) verbunden ist.

6. Elektronische Vorrichtung (100) nach Anspruch 5, wobei der Adapter (40) einen Adapterteil (43) umfasst; und
der Adapterteil (43) elektrisch zwischen dem elastischen Teil (42) und einem zweiten Kontakt der Tastatur verbunden ist, und ein Bereich einer Oberfläche, die von dem Adapterteil (43) stammt und die dem zweiten Kontakt zugewandt ist, größer oder gleich einem Bereich einer Oberfläche ist, die von dem zweiten Kontakt stammt und die dem Adapterteil (43) zugewandt ist; oder der Adapterteil (43) elektrisch zwischen dem elastischen Teil (42) und einem ersten Kontakt des Hosts (10) verbunden ist, und ein Bereich einer Oberfläche, die von dem Adapterteil (43) stammt und die dem ersten Kontakt zugewandt ist, größer oder gleich einem Bereich einer Oberfläche ist, die von dem ersten Kontakt stammt und die dem Adapterteil (43) zugewandt ist.

7. Elektronische Vorrichtung (100) nach einem der Ansprüche 1 bis 6, wobei eine Projektion einer Mitte einer Oberfläche, die von dem Adapter (40) stammt und die dem Host (10) zugewandt ist, in einer zweiten Richtung nicht mit einer Projektion einer Mitte einer Oberfläche, die von dem Adapter (40) stammt und die der externen Tastatur (20) zugewandt ist, in der zweiten Richtung zusammenfällt, und die zweite Richtung senkrecht zu der Anzeige (12) verläuft.

8. Elektronische Vorrichtung (100) nach einem der Ansprüche 5 bis 7, wobei der Adapter (40) den Adapterteil (43) und einen Verbindungsteil (44) umfasst, wobei der Verbindungsteil (44) elektrisch zwischen dem elastischen Teil (42) und dem Adapterteil (43) verbunden ist, und der Adapterteil (43) elektrisch zwischen dem Verbindungsteil (44) und der externen Tastatur (20) verbunden ist.

9. Elektronische Vorrichtung (100) nach Anspruch 8, wobei der Verbindungsteil (44) eine flexible Leiterplatte (442) oder ein Metallblech (440) ist.

10. Adaptiergehäuse (300) zur Verwendung mit einer elektronischen Vorrichtung (100), umfassend einen Host (10) und eine externe Tastatur (20), wobei das Adaptiergehäuse (300) einen Hauptkörper (30) und einen Adapter (40) umfasst, der Adapter (40) in den Hauptkörper (30) eingebettet ist, der Hauptkörper dazu konfiguriert ist, mindestens einen Teil eines Rahmens (13) des Hosts (10) zu umschließen, ein Ende des Adapters (40) dazu konfiguriert ist, mit dem Host (10) in Kontakt zu stehen und elektrisch mit diesem verbunden zu sein, und das andere Ende des Adapters (40) dazu konfiguriert ist, mit der externen Tastatur (20) in Kontakt zu stehen und elektrisch mit dieser verbunden zu sein,
**dadurch gekennzeichnet, dass**
das Adaptiergehäuse (300) ferner eine Pufferkomponente (60) umfasst, und sich die Pufferkomponente (60) an einem Ende befindet, das von dem Adapter (40) stammt und das dem Host (10) zugewandt ist, oder sich die Pufferkomponente (60) an einem Ende befindet, das von dem Adapter (40) stammt und das von dem Host (10) entfernt ist.

11. Adaptiergehäuse (300) nach Anspruch 10, wobei der Hauptkörper (30) einen Hauptteil (31) und einen Seitenteil umfasst, der Seitenteil um den Hauptteil (31) herum angeordnet ist, der Seitenteil mindestens den Teil des Rahmens (13) umschließt und der Adapter (40) in den Hauptteil (31) oder den Seitenteil eingebettet ist.

12. Adaptiergehäuse (300) nach Anspruch 10 oder 11, wobei der Hauptkörper (30) einen ersten Seitenteil (321) und einen zweiten Seitenteil (322) umfasst, die gegenüber einander angeordnet sind, sich der Host (10) zwischen dem ersten Seitenteil (321) und dem zweiten Seitenteil (322) befindet, der Adapter (40) in den zweiten Seitenteil (322) eingebettet ist, eine Abmessung des ersten Seitenteils (321) in einer ersten Richtung größer als eine Abmessung des zweiten Seitenteils (322) in der ersten Richtung ist, und die erste Richtung eine Anordnungsrichtung des ersten Seitenteils (321) und des zweiten Seitenteils (322) ist.

13. Adaptiergehäuse (300) nach einem der Ansprüche 10 bis 12, wobei der Adapter (40) einen elastischen Teil (42) umfasst, und der elastische Teil (42) elastisch zwischen dem Host (10) und der externen Tastatur (20) verbunden ist.

## Revendications

1. Dispositif électronique (100), comprenant un hôte (10) et un boîtier d'adaptation (300), dans lequel l'hôte (10) comprend un couvercle (14), un cadre (13) et un affichage (12), le couvercle (14) et l'affichage (12) étant situés sur deux côtés opposés du cadre (13), et le boîtier d'adaptation (300) entoure au moins une partie du cadre (13) ; et
le boîtier d'adaptation (300) comprend un adaptateur (40), une extrémité de l'adaptateur (40) est configurée pour être en contact et connectée électriquement à l'hôte (10), et l'autre extrémité de l'adaptateur (40) est configurée pour être en contact et connectée électriquement à un clavier externe (20),
**caractérisé en ce que**
le boîtier d'adaptation (300) comprend en outre un composant tampon (60), et le composant tampon (60) est situé au niveau d'une extrémité qui est de l'adaptateur (40) et qui fait face à l'hôte (10), ou le composant tampon (60) est situé au niveau d'une extrémité qui est de l'adaptateur (40) et qui fait face au clavier externe (20).

2. Dispositif électronique (100) selon la revendication 1, dans lequel le boîtier d'adaptation (300) comprend une partie principale (31) et une partie latérale, la partie latérale est disposée autour de la partie principale (31), la partie principale (31) est située sur un côté qui est du couvercle (14) et qui est éloigné de l'affichage (12), la partie latérale entoure au moins la partie du cadre (13), et l'adaptateur (40) est intégré dans la partie principale (31) ou la partie latérale.

3. Dispositif électronique (100) selon la revendication 1 ou 2, dans lequel le boîtier d'adaptation (300) comprend une première partie latérale (321) et une seconde partie latérale (322) qui sont disposées l'une en face de l'autre, l'hôte (10) est situé entre la première partie latérale (321) et la seconde partie latérale (322), l'adaptateur (40) est intégré dans la seconde partie latérale (322), une dimension de la première partie latérale (321) dans une première direction est supérieure à une dimension de la seconde partie latérale (322) dans la première direction, et la première direction est une direction d'agencement de la première partie latérale (321) et de la seconde partie latérale (322).

4. Dispositif électronique (100) selon l'une quelconque des revendications 1 à 3, dans lequel le dispositif électronique (100) comprend un premier composant magnétique (51) et un second composant magnétique (52), le premier composant magnétique (51) est situé au niveau du boîtier d'adaptation (300), le second composant magnétique (52) est situé au niveau du clavier, et une attraction existe entre le premier composant magnétique (51) et le second composant magnétique (52).

5. Dispositif électronique (100) selon l'une quelconque des revendications 1 à 4, dans lequel l'adaptateur (40) comprend une partie élastique (42), et la partie élastique (42) est connectée élastiquement entre l'hôte (10) et le clavier externe (20).

6. Dispositif électronique (100) selon la revendication 5, dans lequel l'adaptateur (40) comprend une partie adaptateur (43) ; et
la partie adaptateur (43) est connectée électriquement entre la partie élastique (42) et un second contact du clavier, et une aire d'une surface qui est de la partie adaptateur (43) et qui fait face au second contact est supérieure ou égale à une aire d'une surface qui est du second contact et qui fait face à la partie adaptateur (43) ; ou
la partie adaptateur (43) est connectée électriquement entre la partie élastique (42) et un premier contact de l'hôte (10), et une aire d'une surface qui est de la partie adaptateur (43) et qui fait face au premier contact est supérieure ou égale à une aire d'une surface qui est du premier contact et qui fait face à la partie adaptateur (43).

7. Dispositif électronique (100) selon l'une quelconque des revendications 1 à 6, dans lequel une projection, dans une seconde direction, d'un centre d'une surface qui est de l'adaptateur (40) et qui fait face à l'hôte (10) ne coïncide pas avec une projection, dans la seconde direction, d'un centre d'une surface qui est de l'adaptateur (40) et qui fait face au clavier externe (20), et la seconde direction est perpendiculaire à l'affichage (12).

8. Dispositif électronique (100) selon l'une quelconque des revendications 5 à 7, dans lequel l'adaptateur (40) comprend la partie adaptateur (43) et une partie de connexion (44), la partie de connexion (44) est connectée électriquement entre la partie élastique (42) et la partie adaptateur (43), et la partie adaptateur (43) est connectée électriquement entre la partie de connexion (44) et le clavier externe (20).

9. Dispositif électronique (100) selon la revendication 8, dans lequel la partie de connexion (44) est une carte de circuit imprimé flexible (442) ou une feuille métallique (440).

10. Boîtier d'adaptation (300), pour une utilisation avec un dispositif électronique (100) comprenant un hôte (10) et un clavier externe (20), dans lequel le boîtier d'adaptation (300) comprend un corps principal (30) et un adaptateur (40), l'adaptateur (40) est intégré dans le corps principal (30), le corps principal est configuré pour entourer au moins une partie d'un cadre (13) de l'hôte (10), une extrémité de l'adaptateur (40) est configurée pour être en contact avec l'hôte (10) et connectée électriquement à celui-ci, et l'autre extrémité de l'adaptateur (40) étant configurée pour être en contact avec le clavier externe (20) et connectée électriquement à celui-ci,
**caractérisé en ce que**
le boîtier d'adaptation (300) comprend en outre un composant tampon (60), et le composant tampon (60) est situé au niveau d'une extrémité qui est de l'adaptateur (40) et qui fait face à l'hôte (10), ou le composant tampon (60) est situé au niveau d'une extrémité qui est de l'adaptateur (40) et qui est éloignée de l'hôte (10).

11. Boîtier d'adaptation (300), selon la revendication 10, dans lequel le corps principal (30) comprend une partie principale (31) et une partie latérale, la partie latérale est disposée autour de la partie principale (31), la partie latérale entoure au moins la partie du cadre (13), et l'adaptateur (40) est intégré dans la partie principale (31) ou la partie latérale.

12. Boîtier d'adaptation (300), selon la revendication 10 ou 11, dans lequel le corps principal (30) comprend une première partie latérale (321) et une seconde partie latérale (322) qui sont disposées l'une en face de l'autre, l'hôte (10) est situé entre la première partie latérale (321) et la seconde partie latérale (322), l'adaptateur (40) est intégré dans la seconde partie latérale (322), une dimension de la première partie latérale (321) dans une première direction est supérieure à une dimension de la seconde partie latérale (322) dans la première direction, et la première direction est une direction d'agencement de la première partie latérale (321) et de la seconde partie latérale (322).

13. Boîtier d'adaptation (300) selon l'une quelconque des revendications 10 à 12, dans lequel l'adaptateur (40) comprend une partie élastique (42), et la partie élastique (42) est connectée élastiquement entre l'hôte (10) et le clavier externe (20) .
